# FASCICULE DE BREVET EUROPEEN

(11) **EP 3 164 621 B1**
(45) Date de publication et mention de la délivrance du brevet: **03.10.2018**
(21) Numéro de dépôt: 15733821.1
(22) Date de dépôt: 10.06.2015
(51) Int. Cl.: F16F 15/129, F16F 15/14

(54) **SYSTÈME D'AMORTISSEMENT DE VIBRATIONS POUR UN DISPOSITIF DE TRANSMISSION DE COUPLE**
SCHWINGUNGSDÄMPFUNGSSYSTEM FÜR EINE DREHMOMENTÜBERTRAGUNGSEINRICHTUNG
VIBRATION DAMPING SYSTEM FOR A TORQUE TRANSMISSION DEVICE

(30) Priorité: 04.07.2014 FR 1456455
(43) Date de publication de la demande: 10.05.2017
(73) Titulaire: PSA Automobiles SA, 78300 Poissy (FR)
(72) Inventeur: FALCOZ, Marc, 78100 St Germain en Laye (FR)
(74) Mandataire: Renous Chan, Véronique
(86) Numéro de dépôt international: PCT/FR2015/051532
(87) Numéro de publication internationale: WO 2016/001500

(56) Documents cités:
- EP-A1- 2 607 743
- FR-A1- 2 826 079
- US-A1- 2014 013 899

## Description

L'invention a trait à un dispositif de transmission de couple, et plus particulièrement à un système d'amortissement de vibrations pour un dispositif de transmission de couple.

Le fonctionnement des moteurs alternatifs à combustion interne présente des fluctuations du couple moteur appelées des acyclismes. Les acyclismes se traduisent notamment par la création de vibrations qui se propagent aux différents dispositifs transmettant la puissance issue du moteur. Les vibrations provoquées par les acyclismes sont notamment la cause de nuisances sonores au sein de l'habitacle du véhicule, et d'une dégradation accélérée des dispositifs de transmission couplés directement ou indirectement au moteur du véhicule.

Afin de filtrer et d'absorber les vibrations dues aux acyclismes du moteur, des systèmes d'amortissement de type pendulaire équipent notamment les dispositifs de transmission de couple tels que le volant moteur ou l'embrayage. Ces systèmes d'amortissement génèrent un couple oscillant qui s'oppose au couple du moteur et absorbe une partie des acyclismes du moteur.

Les constructeurs automobiles cherchent de manière continue à réduire les effets des acyclismes du moteur en perfectionnant notamment les systèmes d'amortissement situés sur les dispositifs de transmission de couple.

On connait du document DE 102009042836 un système d'amortissement de vibrations pour un dispositif de transmission de couple, du type volant moteur bi-masse comprenant un disque tournant, ce système d'amortissement comprenant une masselotte ayant une extrémité primaire et une extrémité secondaire, cette masselotte étant montée mobile par rapport au disque. Plus précisément, ce dispositif connu de transmission de couple comprend une masse primaire reliée à un vilebrequin d'un moteur et articulée, via des éléments d'amortissement, à une masse secondaire reliée, quant à elle, à un dispositif d'embrayage. Le disque sur lequel sont montées les masselottes mobiles se présente sous la forme d'un anneau et est fixé sur la masse secondaire du dispositif de transmission. Le système d'amortissement comprend douze masselottes uniformément réparties et montées par paire de part et d'autre du disque, chaque paire de masselotte étant guidée par rapport au disque par l'intermédiaire de deux rouleaux cylindriques libres de se mouvoir au sein de découpes situées à proximité des extrémités primaires et secondaires des masselottes. Les masselottes décrivent un mouvement oscillant, celles-ci se déplaçant ainsi dans un sens horaire et dans un sens antihoraire. Le déplacement de chaque paire de masselottes est stoppé dans le sens horaire ou dans le sens antihoraire par des butées munies de tampons. En effet, le dispositif d'amortissement comprend des butées d'extrémité se présentant sous la forme de pions entourés d'une bague élastique et fixés sur le disque à proximité des extrémités des masselottes, et d'une butée centrale comprenant un élément absorbant solidaire des masselottes au travers de rivets, cette butée centrale étant mobile au sein d'une ouverture du disque.

Les butées munies de tampons représentent un progrès par rapport aux butées classiques, mais elles demeurent perfectibles.

En effet, ces butées n'absorbent qu'une très faible partie de l'énergie cinétique emmagasinée par la masselotte et peuvent provoquer lors de l'impact des masselottes un effet de « rebond », susceptible d'entraîner un emballement du système d'amortissement. Ce comportement des masselottes entraîne ainsi une dégradation accélérée du système d'amortissement et diminue l'efficacité de celui-ci lors de son fonctionnement.

D'autre part, le fait que la butée centrale et la butée d'extrémité agissent simultanément pour stopper une paire de masselottes nécessite une synchronisation, afin que chaque butée puisse absorber un maximum d'énergie cinétique. Cette condition implique une cotation précise des différents éléments composant le système d'amortissement, entraînant un coût de fabrication élevé. Le document EP 2 607 743 A1 montre toutes les caractéristiques du préambule de la revendication 1.

Un premier objectif est de proposer un système d'amortissement de vibrations pour un dispositif de transmission de couple permettant d'absorber l'énergie emmagasinée par la masselotte et d'éviter un effet de « rebond » de celle-ci, susceptible d'entraîner un emballement.

Un second objectif est de proposer un système d'amortissement pour un dispositif de transmission de couple présentant une architecture simple et un faible coût.

Un troisième objectif est de proposer un dispositif de transmission de couple comprenant un disque et un système d'amortissement de vibrations répondant aux objectifs ci-dessus exprimés, le système d'amortissement étant monté sur le disque.

Un quatrième objectif est de proposer un véhicule comprenant un dispositif de transmission répondant à l'objectif ci-dessus exprimé.

A cet effet, il est proposé, en premier lieu, un système d'amortissement de vibrations pour un dispositif de transmission de couple comprenant un disque tournant, ce système d'amortissement comprenant une masselotte ayant une extrémité primaire et une extrémité secondaire, cette masselotte étant montée mobile par rapport au disque, le système d'amortissement comprenant également un frein ayant une surface de friction destinée à être en contact frottant avec une surface de frottement solidaire du disque, le frein étant monté mobile par rapport au disque entre une extrémité primaire et une extrémité secondaire, le frein ayant une surface de butée primaire en regard de l'extrémité primaire, et une surface de butée secondaire en regard de l'extrémité secondaire, le frein étant monté mobile dans deux sens opposés, à savoir :
- un sens primaire sous l'action de l'extrémité primaire venant en contact avec la surface de butée primaire ;
- un sens secondaire sous l'action de l'extrémité secondaire venant en contact avec la surface de butée secondaire,
- et le frein comprend une surface cylindrique interne et une surface cylindrique externe reliant la surface de friction et une surface inférieure opposée à la surface de friction et en regard du disque, la surface cylindrique externe étant en regard d'une paroi interne d'une bordure faisant saillie du disque, et la surface cylindrique interne étant en regard d'une face d'appui d'un bossage faisant saillie du disque.

Diverses caractéristiques supplémentaires peuvent être prévues, seules ou en combinaison :
- le système d'amortissement de vibrations comprend un ressort positionné entre le disque et le frein, ce ressort étant apte à maintenir le contact entre la surface de friction et la surface de frottement ;
- le frein comprend un relief primaire et un relief secondaire, ces reliefs faisant saillie de la surface inférieure et étant situés respectivement à proximité de la surface de butée primaire et de la surface de butée secondaire, les reliefs primaire et secondaire étant aptes à venir respectivement en butée avec une empreinte primaire et une empreinte secondaire du disque ;
- le ressort est placé entre la surface inférieure et le disque ;
- le système d'amortissement de vibrations comprend un couvercle fixé sur le disque, ce couvercle comprenant la surface de frottement de sorte que celle-ci soit positionnée en contact avec la surface de friction ;
- le couvercle comprend un orifice qui coopère avec un doigt faisant saillie d'une face supérieure du bossage, de sorte que la surface de frottement soit en contact avec la face supérieure ;
- le système d'amortissement de vibrations comprend trois masselottes et trois freins.

Il est proposé, en deuxième lieu, un dispositif de transmission de couple comprenant un disque et un système d'amortissement de vibrations tel que décrit ci-dessus, le système d'amortissement étant monté sur le disque.

Il est proposé, en troisième lieu, un véhicule comprenant un dispositif de transmission tel que décrit ci-dessus.

D'autres objets et avantages de l'invention apparaîtront à la lumière de la description d'un mode de réalisation, faite ci-après en référence aux dessins annexés dans lesquels :
- la figure 1 est une vue en perspective d'un véhicule automobile comprenant un dispositif de transmission de couple ayant un système d'amortissement de vibrations ;
- la figure 2 est une vue en perspective de face, éclatée, du dispositif de transmission de couple ;
- la figure 3 est une vue en perspective de derrière, éclatée, du dispositif de transmission de couple ;
- la figure 4 est un médaillon de détail en perspective, éclatée, du système d'amortissement de vibrations ;
- la figure 5 est une vue de face du dispositif de transmission de couple ayant le système d'amortissement de vibrations dans une position intermédiaire (couvercle non représenté) ;
- la figure 6 est une vue de face du dispositif de transmission de couple, le système d'amortissement de vibrations se déplaçant dans un sens primaire (couvercle non représenté) ;
- la figure 7 est une vue de face du dispositif de transmission de couple, le système d'amortissement de vibrations se déplaçant dans un sens secondaire (couvercle non représenté) ;
- la figure 8 est une vue en coupe du dispositif de transmission de couple, selon le plan de coupe VIII-VIII de la figure 7.

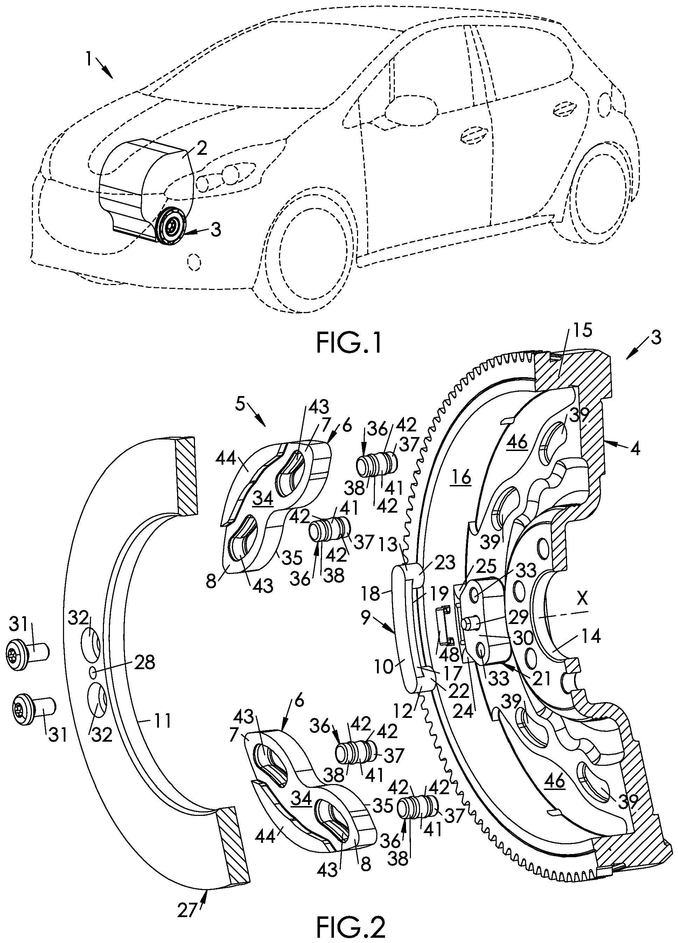

Sur la figure 1 est représenté un véhicule **1** automobile comprenant un moteur **2** à combustion interne et un dispositif **3** de transmission de couple relié au moteur **2**, ce dispositif **3** de transmission de couple permettant notamment de transmettre le couple issu du moteur **2** jusqu'aux roues motrices.

Le dispositif **3** de transmission de couple comprend un disque **4** tournant autour d'un axe de rotation **X** sur lequel est monté un système **5** d'amortissement de vibrations.

Le système **5** d'amortissement comprend des masselottes **6** ayant une extrémité **7** primaire et une extrémité **8** secondaire, ces masselottes **6** étant montées mobiles par rapport au disque **4**.

Le système **5** d'amortissement comprend également des freins **9** ayant une surface **10** de friction destinée à être en contact frottant avec une surface **11** de frottement solidaire du disque **4**.

Chaque frein **9** est monté mobile par rapport au disque **4** entre une extrémité **7** primaire et une extrémité **8** secondaire. Chaque frein **9** comporte une surface **12** de butée primaire en regard de l'extrémité **7** primaire, et une surface **13** de butée secondaire en regard de l'extrémité **8** secondaire.

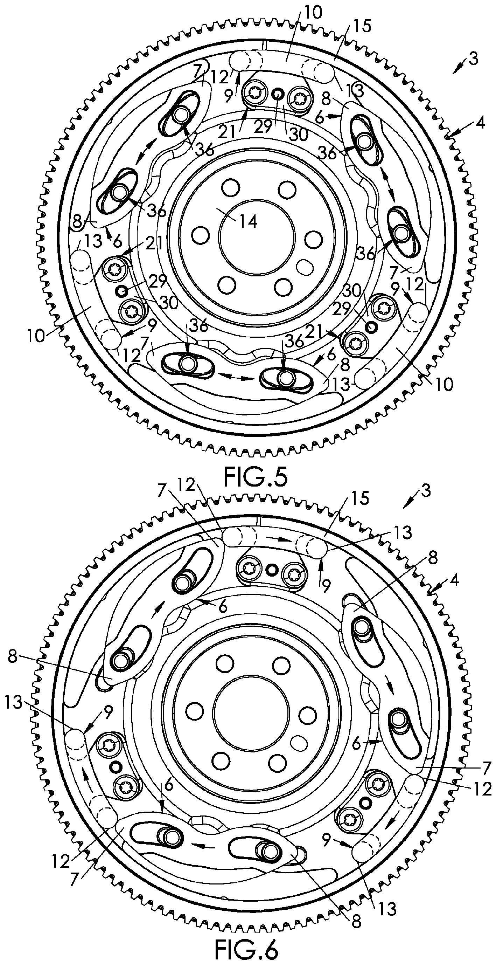

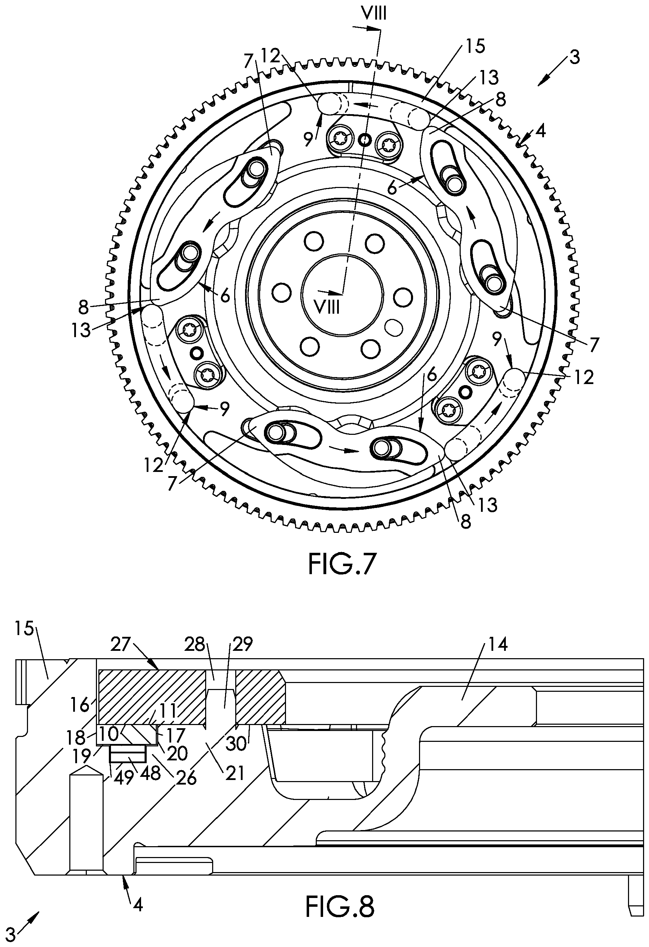

Plus précisément, les freins **9** sont montés mobiles dans deux sens opposés, à savoir :
- un sens primaire sous l'action de l'extrémité **7** primaire de la masselotte **6** venant en contact avec la surface **12** de butée primaire du frein **9** (représenté sur la figure 6 par le sens des flèches) ;
- un sens secondaire sous l'action de l'extrémité **8** secondaire de la masselotte **6** venant en contact avec la surface **13** de butée secondaire du frein **9** (représenté sur la figure 7 par le sens des flèches).

Le système **5** d'amortissement a pour fonction d'absorber et filtrer les vibrations provoquées notamment par les acyclismes du moteur **2** au sein du dispositif **3** de transmission de couple, afin que celles-ci n'engendrent pas, par exemple, de nuisances sonores et/ou des dégradations.

Plus précisément, dans l'exemple illustré, le dispositif **3** de transmission de couple est un volant moteur, autrement appelé volant d'inertie, relié d'une part à un vilebrequin (non représenté) du moteur **2** et d'autre part à un dispositif d'embrayage (non représenté). Cet exemple n'est en rien limitatif : le dispositif **3** de transmission de couple pourrait être un dispositif d'embrayage, ou tout autre dispositif de transmission de couple permettant de transmettre la puissance issue du moteur **2** et donc susceptible d'être soumis aux acyclismes.

Afin de faciliter la compréhension de la description, le dispositif **3** de transmission de couple sera appelé, ci-après, volant **3** moteur.

Selon le mode de réalisation représenté sur les figures, le système **5** d'amortissement possède un nombre de masselottes **6** égal au nombre de freins **9**, et en l'occurrence, le système **5** d'amortissement comporte trois masselottes **6** indépendantes et trois freins **9** indépendants uniformément répartis sur le disque **4**.

Selon le mode de réalisation illustré notamment sur la figure 2, le disque **4** comporte en son centre une portion **14** bombée apte à recevoir le vilebrequin du moteur **2** et délimitée en périphérie par une bordure **15** cylindrique, cette bordure **15** comprenant une paroi **16** interne.

Selon le mode de réalisation illustré notamment sur la figure 8, chaque frein **9** comprend une surface **17** cylindrique interne et une surface **18** cylindrique externe, coaxiales, reliant la surface **10** de friction et une surface **19** inférieure, cette surface **19** inférieure étant opposée à la surface **10** de friction et en regard du disque **4.**

Les surfaces **17**, **18** cylindriques interne et externe sont en outre coaxiales avec la paroi **16** interne du disque **4**. La surface **18** cylindrique externe est en regard de la paroi **16** interne de la bordure **15** du disque **4**. La surface **17** cylindrique interne est en regard d'une face **20** d'appui d'un bossage **21** faisant saillie du disque **4**. Le frein **9** est ainsi mobile et guidé latéralement par la paroi **16** interne et la face **20** d'appui.

Chaque frein **9** comporte également un relief **22** primaire et un relief **23** secondaire, ces reliefs **22**, **23** étant cylindriques et faisant saillie de la surface **19** inférieure de sorte que les reliefs **22**, **23** primaire et secondaire coïncident respectivement avec les surfaces **12**, **13** de butée primaire et secondaire.

Les reliefs **22**, **23** primaire et secondaire sont aptes à venir respectivement en butée avec une empreinte **24** primaire et une empreinte **25** secondaire formées dans une languette **26** du disque **4**, cette languette **26** reliant respectivement la paroi **16** interne et le bossage **21**. Les empreintes **24**, **25** primaire et secondaire possèdent une forme complémentaire aux reliefs **22**, **23** primaire et secondaire.

Selon une variante de réalisation non représentée, la surface de friction est la surface cylindrique externe, et la surface de frottement est la paroi interne du disque.

Selon un mode de réalisation non représenté, les freins sont dépendants les uns des autres en étant reliés entre eux.

Selon le mode de réalisation illustré sur les figures, le système **5** d'amortissement de vibrations comprend, en outre, un couvercle **27** en forme d'anneau fixé sur le disque **4**, ce couvercle **27** comprenant la surface **11** de frottement de sorte que celle-ci soit positionnée en contact avec les surfaces **10** de friction des masselottes **6**.

Plus précisément, le couvercle **27** est positionné sur le disque **4** par l'intermédiaire d'orifices **28** qui coopèrent avec des doigts **29** faisant saillie de faces **30** supérieures des bossages **21**, la surface **11** de frottement du couvercle **27** étant en contact avec les faces **30** supérieures. Le couvercle **27** est maintenu en position par l'intermédiaire de vis **31**, chaque vis **31** coopérant avec un trou **32** lamé et étant vissé au sein d'un trou **33** taraudé formé dans le bossage **21**.

Selon le mode de réalisation illustré, chaque masselotte **6** se présente sous la forme d'une lunule délimitée par une façade **34** supérieure et une façade **35** inférieure. Chaque masselotte **6** est positionnée entre le disque **4** et le couvercle **27** de sorte que les façades **35**, **34** inférieure et supérieure soient respectivement en regard du disque **4** et du couvercle **27**.

Chaque masselotte **6** est tout d'abord guidée par deux pions **36** mobiles par rapport au disque **4** et sensiblement cylindriques, chaque pion **36** ayant une portion **37** inférieure et une portion **38** supérieure aptes à coopérer respectivement avec une rainure **39** du disque **4** et un sillon **40** du couvercle **27**, ce sillon **40** et cette rainure **39** étant de formes identiques et placés en regard. Le pion **36** comprend en outre une portion **41** intermédiaire, située entre la portion **37** inférieure et la portion **38** supérieure, cette portion **41** intermédiaire étant délimitée par deux bourrelets **42**.

Chaque masselotte **6** comprend deux trous **43** oblongs situés à proximité des extrémités **7**, **8** primaire et secondaire, chaque trou **43** oblong coopérant avec la portion **41** intermédiaire d'un pion **36**.

Le guidage de chaque masselotte **6** est complété par une bande **44** supérieure et une bande **45** inférieure faisant saillie respectivement de la façade **34** supérieure et de la façade **35** inférieure, ces bandes **44**, **45** supérieure et inférieure étant placées respectivement au sein d'une excavation **47** du couvercle **27** et d'un évidement **46** du disque **4**. Cet évidement **46** et cette excavation **47** sont de formes identiques et sont placés en regard.

Selon le mode de réalisation illustré, le système **5** d'amortissement de vibrations comprend également des ressorts **48** à lame positionnés entre le disque **4** et les freins **9**, chaque ressort **48** étant apte à maintenir le contact entre la surface **10** de friction du frein **9** et la surface **11** de frottement.

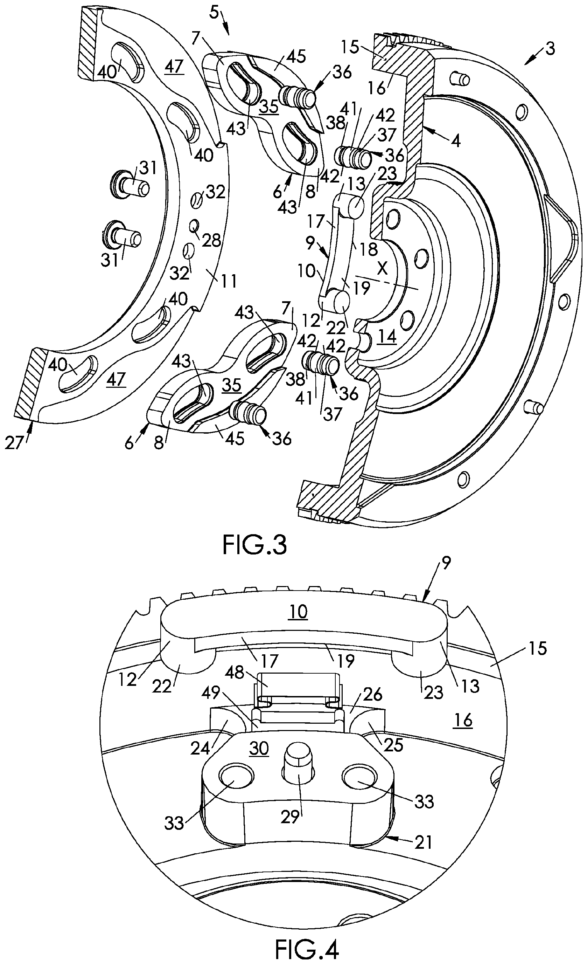

Plus précisément, tel que l'on peut le voir sur la figure 4, chaque ressort **48** est placé au sein d'une cavité **49** formée dans la languette **26** et est en contact avec la surface **19** inférieure du frein **9**.

Selon un mode de réalisation non représenté, un ressort permet de maintenir le contact entre la surface cylindrique externe du frein sur la paroi interne du disque.

En fonctionnement, c'est à dire lorsque le volant **3** moteur tourne, le système **5** d'amortissement de vibrations génère par le déplacement des masselottes **6**, un couple oscillant qui s'oppose au couple du moteur **2** et absorbe une partie des acyclismes du moteur **2**.

Lorsque les masselottes **6** se déplacent dans le sens primaire représenté par le sens des flèches sur la figure 6, le freinage de la masselotte **6** débute lorsque l'extrémité **7** primaire de celles-ci rentre en contact avec la surface **12** de butée primaire du frein **9**. Ce freinage est réalisé, comme on peut le voir sur la figure 8, par l'intermédiaire du contact frottant entre la surface **11** de frottement et la surface **10** de friction.

Dans le sens secondaire, représenté par le sens des flèches sur la figure 7, le freinage de la masselotte **6** débute lorsque l'extrémité **8** secondaire de celles-ci rentre en contact avec la surface **13** de butée secondaire. Ce freinage est également réalisé, comme on peut le voir sur la figure 8, par l'intermédiaire du contact frottant entre la surface **11** de frottement et la surface **10** de friction.

Avantageusement, afin de minimiser le bruit lors du contact de la masselotte **6** avec le frein **9**, un élément amortissant peut être ajouté sur les surfaces **12**, **13** de butée primaire et secondaire.

En fonctionnement, le système **5** d'amortissement est également soumis à la force centrifuge engendré par la rotation du volant **3** moteur. Cette force centrifuge plaque notamment la surface **18** cylindrique externe du frein **9** sur la paroi **16** interne du disque **4** entrainant un contact frottant lors du déplacement du frein **9**, ce contact participant ainsi au freinage de la masselotte **6**. L'intensité de ce contact dépend d'une part du régime moteur et d'autre part de la masse du frein **9**.

Ainsi, le système **5** d'amortissement offre la possibilité de pouvoir régler l'intensité du freinage des masselottes **6** en faisant varier la masse des freins **9** et la raideur des ressorts **48**.

Selon un autre mode de réalisation non représenté, une seconde masselotte dépendante ou indépendante d'une première masselotte est superposée sur celle-ci de sorte que la façade **34** supérieure de la première masselotte soit en regard de la façade **35** inférieure de la seconde masselottes, ces deux masselottes rentrant en contact avec les mêmes freins **9**.

Le système **5** d'amortissement de vibrations qui vient d'être décrit présente de nombreux avantages.

Premièrement, l'énergie cinétique emmagasinée par les masselottes **6** du système **5** d'amortissement est absorbée par les freins **9** lorsque les masselottes **6** sont en fin de course. Les freins **9** permettent d'éviter un effet de « rebond » des masselottes **6**, susceptible d'entrainer un emballement du système **5** d'amortissement de vibrations.

Deuxièmement, le système **5** d'amortissement permet de freiner les masselottes **6** en fin de course, tout en laissant celles-ci libres de se mouvoir dans le sens primaire ou dans le sens secondaire, en fonction du régime moteur.

Troisièmement, le système **5** d'amortissement s'adapte automatiquement au régime moteur. En effet, lorsque les masselottes **6** se déplacent par exemple dans le sens primaire, plus l'énergie emmagasinée par les masselottes **6** est importante, plus elles repousseront loin les freins **9**, et plus les masselottes **6** seront freinées tôt lorsqu'elles se déplaceront dans le sens secondaire. A l'inverse, lorsque l'énergie emmagasinée par les masselottes **6** est faible, celles-ci repoussent très peu les freins **9**, cela entrainant un début de freinage retardé dans le sens inverse.

Quatrièmement, l'architecture du système **5** d'amortissement est simple avec un nombre de pièces réduit. Cette architecture, associée au fait que les masselottes **6** et les freins **9** soient standardisés, permet d'obtenir un coût réduit aussi bien au niveau des pièces qu'au niveau de l'assemblage.

## Revendications

1. Système (**5**) d'amortissement de vibrations pour un dispositif (**3**) de transmission de couple comprenant un disque (**4**) tournant, ce système (**5**) d'amortissement comprenant une masselotte (**6**) ayant une extrémité (**7**) primaire et une extrémité (**8**) secondaire, cette masselotte (**6**) étant montée mobile par rapport au disque (**4**), le système (**5**) d'amortissement comprend également un frein (**9**) ayant une surface (**10**) de friction destinée à être en contact frottant avec une surface (**11**) de frottement solidaire du disque (**4**), le frein (**9**) étant monté mobile par rapport au disque (**4**) entre l' extrémité (**7**) primaire et l' extrémité (**8**) secondaire, le frein (**9**) ayant une surface (**12**) de butée primaire en regard de l'extrémité (**7**) primaire, et une surface (**13**) de butée secondaire en regard de l'extrémité (**8**) secondaire, le frein (**9**) étant monté mobile dans deux sens opposés, à savoir :
- un sens primaire sous l'action de l'extrémité (**7**) primaire venant en contact avec la surface (**12**) de butée primaire ;
- un sens secondaire sous l'action de l'extrémité (**8**) secondaire venant en contact avec la surface (**13**) de butée secondaire, le système d'amortissement étant **caractérisé en ce que** le frein (**9**) comprend une surface (**17**) cylindrique interne et une surface (**18**) cylindrique externe reliant la surface (**10**) de friction et une surface (**19**) inférieure opposée à la surface (**10**) de friction et en regard du disque (**4**), la surface (**18**) cylindrique externe étant en regard d'une paroi (**16**) interne d'une bordure (**15**) faisant saillie du disque (**4**), et la surface (**17**) cylindrique interne étant en regard d'une face (**20**) d'appui d'un bossage (**21**) faisant saillie du disque (**4**).

2. Système (**5**) d'amortissement de vibrations selon la revendication 1, **caractérisé en ce qu'**il comprend un ressort (**48**) positionné entre le disque (**4**) et le frein (**9**), ce ressort (**48**) étant apte à maintenir le contact entre la surface (**10**) de friction et la surface (**11**) de frottement.

3. Système (**5**) d'amortissement de vibrations selon la revendication 1 ou 2, **caractérisé en ce que** le frein (**9**) comprend un relief (**22**) primaire et un relief (**23**) secondaire, ces reliefs (**22**), (**23**) faisant saillie de la surface (**19**) inférieure et étant situés respectivement à proximité de la surface (**12**) de butée primaire et de la surface (**13**) de butée secondaire, les reliefs (**22**), (**23**) primaire et secondaire étant aptes à venir respectivement en butée avec une empreinte (**24**) primaire et une empreinte (**25**) secondaire du disque (**4**).

4. Système (**5**) d'amortissement de vibrations selon l'une des revendications précédentes, **caractérisé en ce que** le ressort (**48**) est placé entre la surface (**19**) inférieure et le disque (**4**).

5. Système (**5**) d'amortissement de vibrations selon l'une des revendications précédentes, **caractérisé en ce qu'**il comprend un couvercle (**27**) fixé sur le disque (**4**), ce couvercle (**27**) comprenant la surface (**11**) de frottement de sorte que celle-ci soit positionnée en contact avec la surface (**10**) de friction.

6. Système (**5**) d'amortissement de vibrations selon la revendication 5, **caractérisé en ce que** le couvercle (**27**) comprend un orifice (**28**) qui coopère avec un doigt (**29**) faisant saillie d'une face (**30**) supérieure du bossage (**21**) de sorte que la surface (**11**) de frottement soit en contact avec la face (**30**) supérieure.

7. Système (**5**) d'amortissement de vibrations selon l'une des revendications précédentes, **caractérisé en ce qu'**il comprend trois masselottes (**6**) et trois freins (**9**).

8. Dispositif (**3**) de transmission de couple comprenant un disque (**4**) et un système (**5**) d'amortissement de vibrations selon l'une des revendications précédentes, le système (**5**) d'amortissement étant monté sur le disque (**4**).

9. Véhicule (**1**) automobile comprenant un dispositif (**3**) de transmission de couple selon la revendication 8.

## Patentansprüche

1. Schwingungsdämpfungssystem (5) für eine Drehmomentübertragungseinrichtung (3), das eine drehende Scheibe (4) umfasst, wobei dieses Dämpfungssystem (5) ein Fliehgewicht (6) umfasst, das ein Primärende (7) und ein Sekundärende (8) hat, wobei dieses Fliehgewicht (6) in Bezug auf die Scheibe (4) beweglich montiert ist, wobei das Dämpfungssystem (5) auch eine Bremse (9) umfasst, die eine Reibungsoberfläche (10) hat, die dazu bestimmt ist, in reibendem Kontakt mit einer Reiboberfläche (11), die fest mit der Scheibe (4) verbunden ist, zu sein, wobei die Bremse (9) in Bezug auf die Scheibe (4) zwischen dem Primärende (7) und dem Sekundärende (8) beweglich montiert ist, wobei die Bremse (9) eine Primäranschlagoberfläche (12) gegenüber dem Primärende (7) hat, und eine Sekundäranschlagoberfläche (13) gegenüber dem Sekundärende (8), wobei die Bremse (9) in zwei entgegengesetzte Richtungen beweglich ist, nämlich:
- eine Primärrichtung unter der Einwirkung des Primärendes (7), das mit der Primäranschlagoberfläche (12) in Berührung kommt;
- eine Sekundärrichtung unter der Einwirkung des Sekundärendes (8), das mit der Sekundäranschlagoberfläche (13) in Berührung kommt,
Dämpfungssystem **dadurch gekennzeichnet, dass** die Bremse (9) eine interne zylindrische Oberfläche (17) und eine externe zylindrische Oberfläche (18), die die Reibungsoberfläche (10) verbindet, und eine untere Oberfläche (19) entgegengesetzt zu der Reibungsoberfläche (10) und gegenüber der Scheibe (4) umfasst, wobei die externe zylindrische Oberfläche (18) einer Innenwand (16) eines Rands (15) gegenüber liegt, der von der Scheibe (4) vorsteht, und die interne zylindrische Oberfläche (17) einer Auflagefläche (20) eines Höckers (21), der von der Scheibe (4) vorsteht, gegenüber liegt.

2. Schwingungsdämpfungssystem nach Anspruch 1, **dadurch gekennzeichnet, dass** es eine Feder (48) umfasst, die zwischen der Scheibe (4) und der Bremse (9) positioniert ist, wobei diese Feder (48) geeignet ist, um den Kontakt zwischen der Reibungsoberfläche (10) und der Reiboberfläche (11) aufrecht zu erhalten.

3. Schwingungsdämpfungssystem (5) nach Anspruch 1 oder 2, **dadurch gekennzeichnet, dass** die Bremse (9) ein Primärrelief (22) und ein Sekundärrelief (23) umfasst, wobei diese Reliefs (22), (23) von der unteren Oberfläche (19) vorragen und jeweils in der Nähe der Primäranschlagoberfläche (12) und der Sekundäranschlagoberfläche (13) liegen, wobei das Primärrelief (22) und das Sekundärrelief (23) angepasst sind, um jeweils mit einer Primärprägung (24) und einer Sekundärprägung (25) der Scheibe (4) zum Anschlagen zu kommen.

4. Schwingungsdämpfungssystem (5) nach einem der vorhergehenden Ansprüche, **dadurch gekennzeichnet, dass** die Feder (48) zwischen der unteren Oberfläche (19) und der Scheibe (4) platziert ist.

5. Schwingungsdämpfungssystem (5) nach einem der vorhergehenden Ansprüche, **dadurch gekennzeichnet, dass** es einen Deckel (27) umfasst, der auf der Scheibe (4) befestigt ist, wobei dieser Deckel (27) die Reiboberfläche (11) derart umfasst, dass diese in Berührung mit der Reibungsoberfläche (10) positioniert ist.

6. Schwingungsdämpfungssystem (5) nach Anspruch 5, **dadurch gekennzeichnet, dass** der Deckel (27) eine Öffnung (28) umfasst, die mit einem Finger (29) zusammenwirkt, der von einer oberen Fläche (30) des Höckers (21) derart vorsteht, dass die Reiboberfläche (11) mit der oberen Fläche (30) in Berührung ist.

7. Schwingungsdämpfungssystem (5) nach einem der vorhergehenden Ansprüche, **dadurch gekennzeichnet, dass** es drei Fliehgewichte (6) und drei Bremsen (9) umfasst.

8. Schwingungsdämpfungssystem (5), das eine Scheibe (4) und ein Schwingungsdämpfungssystem (5) nach einem der vorhergehenden Ansprüche umfasst, wobei das Dämpfungssystem (5) auf die Scheibe (4) montiert ist.

9. Kraftfahrzeug (1), das eine Drehmomentübertragungsvorrichtung (3) nach Anspruch 8 umfasst.

## Claims

1. A vibration damping system (5) for a torque transmission device (3), including a rotating disc (4), this damping system (5) including a flyweight (6) having a primary end (7) and a secondary end (8), this flyweight (6) being mounted so as to movable with respect to the disc (4), the damping system (5) also includes a brake (9) having a friction surface (10) intended to be in frictional contact with a rubbing surface (11) integral with the disc (4), the brake (9) being mounted so as to be movable with respect to the disc (4) between the primary end (7) and the secondary end (8), the brake (9) having a primary stop surface (12) facing the primary end (7), and a secondary stop surface (13) facing the secondary end (8), the brake (9) being mounted so as to be movable in two opposite directions, namely:
- a primary direction under the action of the primary end (7) coming in contact with the primary stop surface (12);
- a secondary direction under the action of the secondary end (8) coming in contact with the secondary stop surface (13),
the damping system being **characterized in that**
the brake (9) includes an internal cylindrical surface (17) and an external cylindrical surface (18) connecting the friction surface (10) and a lower surface (19) opposite the friction surface (10) and facing the disc (4), the external cylindrical surface (18) being arranged facing an internal wall (16) of an edge (15) projecting form the disc (4), and the internal cylindrical surface (17) being arranged facing a support face (20) of a boss (21) projecting from the disc (4).

2. The vibration damping system (5) according to Claim 1, **characterized in that** it includes a spring (48) positioned between the disc (4) and the brake (9), this spring (48) being able to maintain the contact between the friction surface (10) and the rubbing surface (11).

3. The vibration damping system (5) according to Claim 1 or 2, **characterized in that** the brake (9) includes a primary relief (22) and a secondary relief (23), these reliefs (22), (23) projecting from the lower surface (19) and being situated respectively close to the primary stop surface (12) and to the secondary stop surface (13), the primary and secondary reliefs (22), (23) being able to come respectively into abutment with a primary impression (24) and a secondary impression (25) of the disc (4).

4. The vibration damping system (5) according to one of the preceding claims, **characterized in that** the spring (48) is placed between the lower surface (19) and the disc (4).

5. The vibration damping system (5) according to one of the preceding claims, **characterized in that** it includes a cover (27) fixed on the disc (4), this cover (27) including the rubbing surface (11) such that the latter is positioned in contact with the friction surface (10).

6. The vibration damping system (5) according to Claim 5, **characterized in that** the cover (27) includes an orifice (28) which cooperates with a pin (29) projecting from an upper face (30) of the boss (21) such that the rubbing surface (11) is in contact with the upper face (30).

7. The vibration damping system (5) according to one of the preceding claims, **characterized in that** it includes three flyweights (6) and three brakes (9).

8. A torque transmission device (3) including a disc (4) and a vibration damping system (5) according to one of the preceding claims, the damping system (5) being mounted on the disc (4).

9. A motor vehicle (1) including a torque transmission device (3) according to Claim 8.
